# EUROPEAN PATENT APPLICATION

(11) **EP 4 632 150 A1**
(43) Date of publication of application: **15.10.2025**
(21) Application number: 24169641.8
(22) Date of filing: 11.04.2024
(51) Int. Cl.: E01C 23/088

(54) **MILLING DEPTH CONTROL BASED ON REAL TIME LAYER ANALYSIS OF A STRATIFIED SURFACE TO BE MILLED**

(71) Applicant: Leica Geosystems Technology A/S, 5220 Odense SØ (DK)
(72) Inventor: OLSEN, Kent Stark, 5260 Odense S (DK); MULLIS, Brad, 5200 Odense (DK); SEEMANN, Jürgen, 26209 Hatten (DE)
(74) Representative: Kaminski Harmann

(57) **Abstract**

The application relates to a milling depth control system for a milling machine (1) for milling a stratified surface (3) and a milling machine (1) equipped with a milling depth control system, wherein milling depth control is based on real time layer analysis of surface layers (12, 13) of a stratified surface (3) to be milled. The milling depth control system comprises a surface layer measurement sensor (8), e.g. based on ground penetrating radar technology, installed at the front of the milling machine (1), and a data processing unit (9, 9'). The measurement data of the layer measuring sensor (8) are used by the data processing unit (9, 9') to analyze individual surface layers (12, 13) of the stratified surface (3), e.g. by identifying different surface layers (12, 13) and determining layer thicknesses of the identified surface layers (12, 13), in order to provide a control signal to a control unit (5) of the milling machine (1) to set the milling depth (10, 15) in real time.

## Description

The present invention relates to a milling depth control system for a milling machine for milling a stratified surface and a milling machine equipped with a milling depth control system, wherein milling depth control is based on real time layer analysis of surface layers of a stratified surface to be milled.

By way of example, the present invention relates to road milling operations and milling machines for milling asphalt or concrete in roads or other paved surfaces. Milling machines in road milling comprise a milling tool that is vertically adjustable relative to the milling machine (into the paved surface) and configured to mill the paved surface to a settable milling depth. For example, the milling tool is embodied as rotating drum. The applied milling depth depends on the application, e.g. leveling the ground to apply a new road layer to the existing road or completely renewing the paved road. Milling depths to be applied are often defined by a previously generated milling plan, e.g. a so-called milling depth map, which comprises planned milling depths for different locations on the paved surface to be milled. One problem is that the thickness of an initial pavement layer is often not known anymore for many old roads. Thus the maximum milling depth is not known and there is some risk of milling into the base course.

By way of another example, the present invention relates to surface mining, wherein different surface layers such as coal and other commodities need to be removed separately in an efficient manner. For example, layers of coal and other commodities change in the ground and a continuous adapting of the milling depth is required to separate the coal from the other commodities.

For providing positional reference between sections of a plan to mill a stratified surface and the milling machine (and ultimately the position of the milling tool), the milling machine is often tracked by a total station or other high-precision position determining means, e.g. by using GNSS (global navigation satellite system) or a combination of a total station and GNSS.

A large effort of a milling operation goes into the initial planning phase, comprising inspection of the stratified surface to be milled and setting up a plan for the stratified surface to be milled with different position dependent milling depths according to the objective of the next milling operation. For example, in road milling, there may also be legal regulations to separate and recycle layers where possible, e.g. to comply with so-called closed substance cycle waste management regulations. Planning time is thus one of the reasons for reduced effectiveness, since often no milling operation can be carried out during large parts of the planning phase. It is thus preferable to reduce downtime due to planning efforts.

However, planning efforts are required to ensure safety with regard to equipment/surface damage and also human casualties, which again could lead to downtimes, e.g. because of shortened maintenance cycles of the milling machine and additional work steps due to damages of the milled surface, e.g. a road.

In case the milling tool hits certain objects or hard surface layers such as concrete, the milling tool (or other parts of the milling machine such as the gear box) or the foundation of the paving area to be milled could be damaged. For example, when milling road bridges, it is often particularly important to avoid milling into the concrete foundation of the paved road, because this could cause severe damage to the bridge. Hitting unwanted layers or subsurface objects thus often lead to shortened maintenance cycles and unnecessary downtime of the milling machine. In addition, the milling machine could jump backwards or sideways, which could also damage the milling machine as well as lead to dangerous collisions with construction workers.

It is therefore an object of the present invention to provide a more efficient milling operation.

A further object is to provide for a milling operation based on a shortened planning phase, while maintaining or reducing maintenance cycles of the milling machine and downtime of the milling operation.

A further object is to provide for a milling operation which offers increased flexibility to meet different objectives of a milling process.

These objects are achieved by the realization of at least part of the characterizing features of the independent claims. Features which further develop the invention in an alternative or advantageous manner are described in some of the other features of the independent claims and in the dependent claims.

The invention relates to a milling depth control system for a milling machine configured to mill a stratified surface, wherein the milling machine comprises a milling tool that is vertically adjustable relative to the milling machine (into the stratified surface) and configured to mill the stratified surface to a settable milling depth.

The milling depth control system comprises a layer measuring sensor configured to be mounted on the milling machine in front of the milling tool in the forward direction of travel of the milling machine. The layer measuring sensor is configured to provide measurement data for identifying different surface layers of the stratified surface and for determining thicknesses of the different surface layers. By way of example, the layer measuring sensor is based on ground penetrating radar technology.

The milling depth control system further comprises a data processing unit having a communication interface for providing connection to a control unit of the milling machine. The data processing unit is configured to receive measurement data of the layer measuring sensor obtained during a currently running milling process of the milling machine to carry out a layer analysis of the stratified surface based on the measurement data. Based on the layer analysis, the data processing unit provides a planned final milling depth for an associated surface location captured by the measurement data. The data processing unit then uses the planned final milling depth to provide the control unit of the milling machine a control signal for setting a milling depth of the currently running milling process, wherein the control signal provides for the milling machine setting the planned final milling depth for the associated surface location.

In other words, a surface layer measurement sensor is installed on the milling machine and the measurement data of the layer measuring sensor are used to analyze individual surface layers of the stratified surface, e.g. by identifying different surface layers and determining layer thicknesses of the identified surface layers, in order to set (i.e. to regulate) the milling depth in real time. The surface layer measurement sensor is mounted at the front of the milling machine such that the layer analysis and provision of the control signal can be performed before the cutting tool reaches the same area.

In one embodiment, the data processing unit is configured to provide the planned final milling depth with respect to a target interface between two different surface layers of the stratified surface.

In a further embodiment, the layer measuring sensor is configured that the measurement data provide for identifying differences in material type of the different surface layers, wherein the target interface is an interface between two surface layers of different material type. For example, the interface between two layers of different material type delimits an adjacent lower layer of concrete from an adjacent upper layer of a material other than concrete. Different material types may also refer to different material quality of the same material, e.g. given by different grain sizes and/or purity of the material.

By way of example, different asphalt layers comprise a different mix of fine material, gravel, bitumen, and other ingredients. By milling each asphalt layer separately, a recycling process of these materials can be aided. Normal asphalt road often has three asphalt layers: base, binder, and wearing course. Concrete is often laid only with one mix in one layer or with two layers with two mixes.

The milling depth control system according to the invention thus allows to ensure milling to a specific target surface layer. If milling the target surface layer (which should not actually be milled) poses a risk of damage to the milling tool (and the milling machine) and/or if the target surface layer should not be damaged itself and/or removed layer material should be as "pure" as possible (e.g. only coal), the stratified surface is typically milled to a level slightly above the target interface. For example, when milling asphalt on road bridges, it is often required to avoid milling into the concrete foundation of the paved road, because this could cause severe damage to the bridge. In other cases, e.g. for leveling the ground of a road on solid ground, the paved surface can also be milled to a level slightly below the target interface.

In a further embodiment, the final milling depth is provided such that a deepest point within the stratified surface reached by milling with the final milling depth at the associated surface location lies above or below the target interface and is further away from the target interface than a defined tolerance distance.

In a further embodiment, the target interface is a settable interface out of multiple interfaces between different surface layers of the stratified surface. By way of example, the milling depth control system provides for a user input functionality configured to provide for user selection of the target interface out of the multiple interfaces. For example, the system comprises a display functionality to show the result of the layer analysis to an operator of the milling machine who then selects the layer (e.g. by selecting a target depth or target interface) at which the milling operation should be carried out, wherein the system then automatically stays on target when the milling operation is performed.

Another approach is to mill the stratified surface layer by layer, e.g. removing layer by layer, regardless of the type of material of the different layers, or removing a layer of a first type of material and then a layer of another type of material.

In a further embodiment, the target interface is an interface between a top layer of the stratified surface and its immediate underlying layer of the same material type as the top layer or its nearest underlying layer of a different material type than the top layer. For example, the milling depth control system is configured to have a mode to remove layer by layer regardless of type of material and a mode to remove layer by layer so that alternating layers of different types of material are removed. Depending on the activated mode, the top layer is milled to its immediate underlying layer or to the layer where the type of material changes.

In a further embodiment, the data processing unit comprises a data accumulator part, a map updater part, and an action executor part.

The data accumulator part is configured to reference the measurement data with positional information of the milling machine provided by the control unit of the milling machine. For example, the positional information is provided by position and velocity data of the milling machine. Therefore, the processing unit is configured to provide the planned final milling depth referenced with the positional information of the milling machine.

The map updater part is configured to generate a milling depth map with the planned final milling depth. The milling depth map comprises planned final milling depths for different locations of the milling machine. For example, the milling depth control system is configured to generate the milling depth map from scratch without being provided with an initial version of the milling depth map. Thus, without prior knowledge, the map can be built purely from information from the layer measurement sensor, e.g. a ground penetrating radar. Often, not relying on a pre-defined map may also reduce computational complexity of the system. However, it goes without saying that the milling depth control system may also be configured to receive and update an existing milling depth map generated in a planning phase before the current milling operation. By way of example, the system could be configured to collect and store data from the layer measurement sensor for utilization in further analysis and, for example, for updating a centralized representation of the underground where the operation is performed. The sensor data could also be utilized for correlation and comparisons of previous measurements to detect shifts in the underground.

The action executor part is configured to compare a currently used milling depth with a planned final milling depth provided for a current position of the milling machine within the milling depth map. For example, the current position of the milling machine within the milling depth map is provided by the positional information of the milling machine. Based on this comparison, the action executor part sends a control command to the control unit of the milling machine for commanding a lifting or lowering of the milling tool.

In a further embodiment, the data processing unit is configured that the data accumulator part and the action executor part are each in separate communicative connection with the control unit of the milling machine. For example, this allows the data accumulator part and/or the action executor part to retrieve the positional information of the milling machine directly from the control unit of the milling machine.

In a further embodiment, the data processing unit comprises an intermediate control unit configured to communicate with the data accumulator part, the action executor part, and the control unit of the milling machine. Furthermore, the intermediate control unit is configured to provide for data exchange between the data accumulator part and the control unit, and the action executor part and the control unit, respectively. For example, the data processing unit is configured to solely communicate with the control unit of the milling machine via the intermediate control unit.

The invention further relates to a milling machine configured to mill a stratified surface, wherein the milling machine comprises a milling depth control system as described above and a milling tool that is vertically adjustable relative to the milling machine (into the stratified surface) and configured to mill the stratified surface to a settable milling depth. For example, the milling machine is embodied as a milling machine for road milling or a milling machine for use in surface mining, e.g. wherein different surface layers of different material type need to be removed separately in an efficient manner.

The milling depth control system and the milling machine according to the different aspects of the invention are described or explained in more detail below, purely by way of example, with reference to working examples shown schematically in the drawing. Identical elements are labelled with the same reference numerals in the figures. Specifically,
- Fig. 1:: a schematic depiction of a milling machine equipped with a milling depth control system according to the invention;
- Fig. 2:: a schematic depiction of an ongoing milling process according to an embodiment of the milling depth control system, wherein the planned final milling depth is provided with respect to a target interface between two surface layers of different material type;
- Fig. 3:: a schematic depiction of an ongoing milling process according to a further embodiment of the milling depth control system, wherein the planned final milling depth is provided with respect to a target interface between two surface layers, regardless of the type of material of the different layers;
- Fig. 4:: schematically depicts an embodiment of the data processing unit, wherein the data processing unit comprises an intermediate control unit for providing communication with the milling machine;
- Fig. 5:: schematically depicts an embodiment of the data processing unit, wherein parts of the data processing unit directly communicate with the control unit of the milling machine, without the need of an intermediate control unit acting as relay between the components of the data processing unit and the control unit of the milling machine.

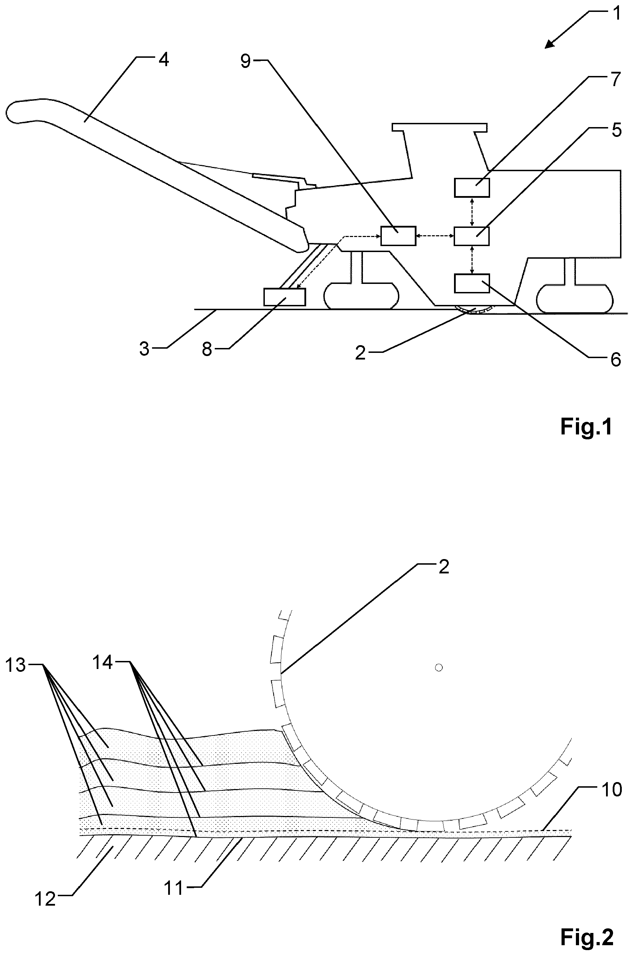

**Figure 1** schematically depicts a milling machine 1 equipped with a milling depth control system according to the invention. The milling machine comprises milling tool 2, here embodied as a rotating milling drum, that is vertically adjustable relative to the milling machine 1 into the stratified surface 3. Removed surface residues are carried away via a conveyor belt 4 to a truck (not shown) that moves in front of the milling machine 1. The milling machine 1 comprises a control unit 5 in communicative connection with an adjustment unit 6 for setting a milling depth (a vertical position of the milling tool 2). The control unit 5 is further connected to a position determining unit 7 of the milling machine 1, which is configured to provide positional information of the milling machine, e.g. position and velocity data of the milling machine. The milling depth control system comprises a layer measuring sensor 8, e.g. embodied as a ground penetrating radar, mounted in front of the milling machine 1, and a data processing unit 9 being connected to the layer measuring sensor 8 and the control unit 5 of the milling machine.

The layer measuring sensor 8 is configured to provide measurement data for identifying different surface layers of the stratified surface 3 and for determining thicknesses of the different surface layers. For example, the layer measuring sensor observes an area on the ground that extends across the entire width of the milling machine 1. The measurement data are utilized by the data processing unit 9 to map the subsurface structure of the stratified surface 3 and to analyze individual surface layers of the stratified surface to set the vertical position of the milling tool 2 in real time, wherein the layer analysis by the data processing unit 9 comprises the identification of different surface layers and the determination of thicknesses of the different layers. The delay from where the layer measuring sensor 8 passes a given area (associated surface location) until the milling tool 2 passes the same area is sufficient as milling machines move slowly, e.g. approximately walking pace. Therefore, there is a good amount of time to process incoming measurement data to provide a planned final milling depth for that area and for providing a control signal for setting the milling tool to the planned final milling depth when it arrives at the area previously measured by the layer measuring sensor 8.

By way of example, a map representation generated by the data processing unit 9 for the stratified surface to be milled can be kept relatively minimal along the forward direction of the milling machine, e.g. wherein the map representation is binned with a suitable resolution.

There is also the possibility that the milling depth control system is further configured to utilize the measurement data of the layer measuring sensor 8 to recognize underground objects to provide a further control signal to the control unit 5 of the milling machine, wherein the further control signal provides lifting of the milling tool 2 in order to avoid milling into certain underground objects. For example, underground objects to be recognized are submerged utilities or objects of hard material that should not be milled into.

In road milling operations, crew members around the milling machine are told never to be too close to it. In the worst case, a milling machine 1 can jump backwards or sideways, up to several meters if the cutting tool 2 hits certain objects in the ground, ultimately leading to fatalities on the construction site. Telling humans not to stay close to the milling machine 1 while it is working is a low-practical solution which is not failsafe and errors will occur occasionally. A known option for making the work around the milling machine 1 safer is to mount laser curtains around the sides and back of the milling machine 1, wherein a breaking of that curtain will stop the machine from working. This solution helps to avoid accidents but does not address the problem of potential hazardous situations for the milling tool 2 and the milling machine 1 when hitting certain underground objects.

By way of example, utilizing the layer measuring sensor 8 for detection of underground assets and subsurface geology in real-time will assist the operator's awareness about the surface being milled, e.g. by presenting the operator a representation of the underground structure of the stratified surface based on the measurement data of the layer measuring sensor 8. Furthermore, feeding detections of certain objects back to the control unit 5 of the milling machine 1 in order to automatically actuate the cutting tool 2 to move up and down can automate the process of avoiding cutting into underground assets and subsurface geology. Thus, applying the layer measuring sensor 8 on milling machines will also result in a system that can avoid hazardous situations for humans, the milling machine 1, and the stratified surface. Wear and tear are reduced on the milling tool 2 and the milling machine 1, which means that downtime due to hitting objects underground is minimized as well.

**Figure 2** shows a milling step according to an embodiment of the milling depth control system, wherein the planned final milling depth 10 for the milling tool 2 is provided with respect to a target interface 11 between two surface layers of different material type.

For example, a road to be milled comprises a ground layer 12 of a first type of material, e.g. concrete, and several stacked road layers 13 of a different type of material, e.g. several layers of asphalt. The layer measuring sensor is configured to provide measurement data for identifying layer interfaces 14 and differences in material type of the different surface layers. The milling depth control system thus is able to identify one of the layer interfaces 14 to be a layer interface 11 between two layers of different material type.

In the example shown, the ground layer 12 should not actually be milled and the milling depth control system is configured to provide for milling to a level slightly above the layer interface 11 between the ground layer 12 (e.g. of concrete) and the road layers 13 (e.g. of asphalt) above. To avoid milling into the ground layer 12, i.e. to avoid accidentally milling deeper than the layer interface 11 between two layers of different material type, the planned final milling depth 10 is provided such that a deepest point within the paved surface reached by milling with the planned final milling depth 10 lies above the layer interface 11 between the ground layer 12 and the road layers 13 and is further away from said layer interface 11 than a defined tolerance distance.

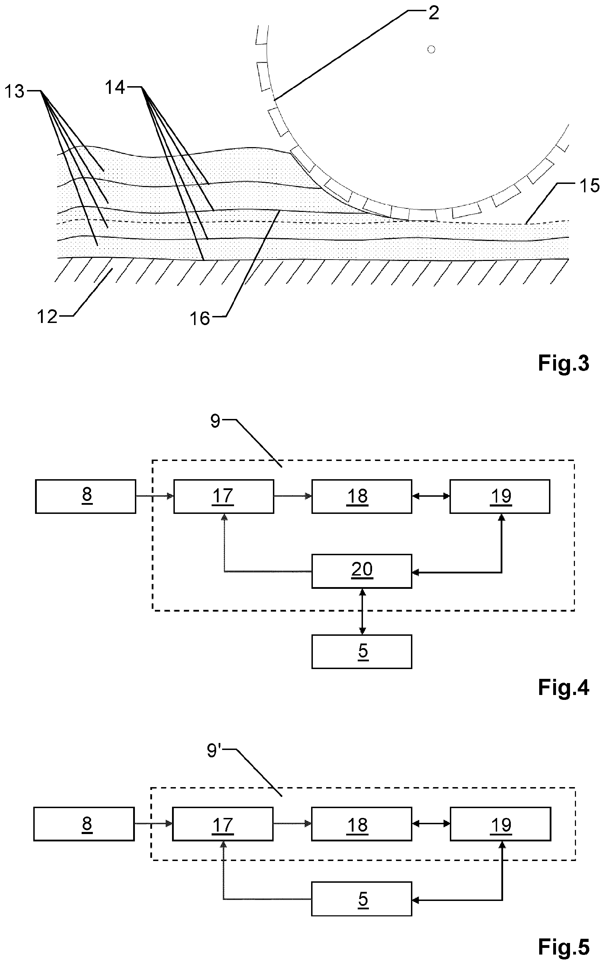

**Figure 3** shows a milling step according to a further embodiment of the milling depth control system, wherein the planned final milling depth 15 for the milling tool 2 is provided with respect to a target interface 16 between two surface layers 13, regardless of the type of material of the different layers. For example, similar to the situation depicted by Fig. 2, a road to be milled comprises a ground layer 12, e.g. of concrete, and several stacked road layers 13, e.g. several layers of asphalt. The layer measuring sensor is configured to provide measurement data for identifying layer interfaces 14 and the data processing unit is configured to provide the planned final milling depth 15 with respect to a particular target interface 16 between two different surface layers of the stratified surface.

In the embodiment shown, the milling tool 2 follows a boundary 15 between the surface layers sought to be separated. Shifts and compression of the milled material will create uneven surfaces with shifts and compressions that are not even across the width of the tool. In addition, the resulting behavior of the milling tool will rely on uncertainties related to the positioning system and mechanical uncertainties of the machine. However, ideally the layers can be separated perfectly.

For example, one application of this embodiment is to provide leveling of the ground to apply a new road layer to the existing road, wherein the planned final milling depth provided by the control unit provides for milling to a level slightly below the target interface 16. Thus, the planned final milling depth 15 is provided such that a deepest point within the paved surface reached by milling with the planned final milling depth 15 lies below the target interface 16.

By way of example, the milling depth control system is configured such that the target interface 16 is a settable interface out of the multiple interfaces 14, e.g. wherein the milling depth control system provides for a user input functionality configured to provide for user selection of a target interface out of the multiple interfaces 14.

**Figures 4 and 5** schematically depict two different embodiments of the data processing unit 9, 9'. In both embodiments, the data processing unit 9, 9' comprises a data accumulator part 17, a map updater part 18, and an action executor part 19. The embodiments differ in that one embodiment (Fig. 4) further comprises an intermediate control unit 20 for integration to the milling machine.

In the embodiment depicted by **Fig. 4****,** communication between the data processing unit 9 of the milling depth control system and the control unit 5 of the milling machine is provided via the intermediate control unit 20, whereas in the embodiment depicted by **Fig 5****,** the data accumulator part 17 and the action executor part 19 are each configured to be directly connected with the control unit 5 of the milling machine.

The data accumulator part 17 is configured to reference the measurement data of the layer measuring sensor 8 with positional information of the milling machine, which allows the processing unit 9, 9' to provide the planned final milling depth referenced with the positional information of the milling machine. The referenced measurement data are sent to the map updater part 18, which is configured to generate or update a milling depth map with the planned final milling depth. The milling depth map comprises planned final milling depths for different locations of the milling machine. The action executor part 19 is configured to retrieve a current position of the milling machine and a currently used milling depth, and to compare the currently used milling depth with a planned final milling depth provided for the current position of the milling machine. Based on this comparison, the action executor part 19 gives out a control command for commanding a lifting or lowering of the milling tool.

In the embodiment depicted by **Fig. 4****,** the control command is sent to the intermediate control unit 20, which then forwards the control command to the control unit 5 of the milling machine. In the embodiment depicted by **Fig. 5****,** the action executor part 19 directly provides the control command to the control unit 5 of the milling machine.

In a further embodiment, the action executor part 19 is further configured to provide for collision avoidance with underground objects such as subsurface utilities captured by the measurement data that should not be milled into. For example, the action executor part 19 asks the map updater part 18, which comprises a map representation of the stratified surface generated by measurement data of the layer measuring sensor whether the milling tool is in range of utilities and whether the tool should be lifted or lowered. The map updater part 18 then responds with either "lift" or "lower", which is then interpreted by the action executor part 19 to provide a corresponding command, if required for collision avoidance, to the control unit 5 of the milling machine. For example, a "lower" and "lift" command are used for automatically controlling a defined setpoint. Alternatively or in addition, the action executor part 19 may be embodied to provide for information of the operator of the milling machine that the milling tool needs to go up or down. Depending on whether the processing unit 9, 9' comprises an intermediate control unit 20 or not, the action executor part 19 has direct access to the control unit 5 of the milling machine or the intermediate control unit 20 acts as an intermediate relay of actions between the action executor part 19 and the control unit 5 of the milling machine. In an emergency case, e.g. if collision cannot be avoided by lifting the milling tool, the map updater part 18 responds with a "stop" command to prompt an automatic stop of the milling machine.

By way of example, positional information of the milling machine are provided as absolute positions referenced to a fixed external coordinate system. Working with absolute positions is possible as milling machines are often tracked by a total station or other precise localization means, e.g. for localizing the machine in an absolute space representation with millimeter precision. For example, the position can be calculated by adding the local position of, for instance, the milling tool relative to prisms on the milling machine to be tracked by a total station.

Although the invention is illustrated above, partly with reference to some preferred embodiments, it must be understood that numerous modifications and combinations of different features of the embodiments can be made. All of these modifications lie within the scope of the appended claims.

## Claims

1. A milling depth control system for a milling machine (1) configured to mill a stratified surface (3), wherein the milling machine (1) comprises a milling tool (2) that is vertically adjustable relative to the milling machine (1) and configured to mill the stratified surface (3) to a settable milling depth, **characterized in that**
the milling depth control system comprises
• a layer measuring sensor (8) configured to be mounted on the milling machine (1) in front of the milling tool (2) in the forward direction of travel of the milling machine (1), wherein the layer measuring sensor (8) is configured to provide measurement data for identifying different surface layers (12, 13) of the stratified surface (3) and for determining thicknesses of the different surface layers, and
• a data processing unit (9, 9') having a communication interface for providing connection to a control unit (5) of the milling machine (1), wherein the data processing unit (9, 9') is configured
∘ to receive measurement data of the layer measuring sensor (8) obtained during a currently running milling process of the milling machine (1),
∘ to carry out a layer analysis of the stratified surface (3) based on the measurement data to provide a planned final milling depth (10, 15) for an associated surface location captured by the measurement data, and
∘ to provide the control unit (5) a control signal for setting a milling depth of the currently running milling process, wherein the control signal provides for setting the planned final milling depth (10, 15) for the associated surface location.

2. Milling depth control system according to claim 1, wherein the data processing unit (9, 9') is configured to provide the planned final milling depth (10, 15) with respect to a target interface (11, 16) between two different surface layers of the stratified surface (3).

3. Milling depth control system according to claim 2, wherein the final milling depth (10, 15) is provided such that a deepest point within the stratified surface (3) reached by milling with the final milling depth (10, 15) at the associated surface location lies above or below the target interface (11, 16) and is further away from the target interface (11, 16) than a defined tolerance distance.

4. Milling depth control system according to any one of claims 2 to 3, wherein the layer measuring sensor (8) is configured that the measurement data provide for identifying differences in material type of the different surface layers (12, 13), wherein the target interface (11) is an interface between two surface layers of different material type.

5. Milling depth control system according to claim 4, wherein the interface (11) between two layers of different material type delimits an adjacent lower layer of concrete (12) from an adjacent upper layer of a material (13) other than concrete.

6. Milling depth control system according to any one of claims 2 to 5, wherein the target interface (11, 16) is a settable interface out of multiple interfaces between different surface layers of the stratified surface (3),
particularly wherein the milling depth control system provides for a user input functionality configured to provide for user selection of the target interface (11, 16) out of the multiple interfaces.

7. Milling depth control system according to any one of claims 2 to 5, wherein the target interface (11, 16) is an interface between a top layer of the stratified surface (3) and its immediate underlying layer of the same material type as the top layer or its nearest underlying layer of a different material type than the top layer.

8. Milling depth control system according to any one of the preceding claims, wherein the layer measuring sensor (8) is based on ground penetrating radar technology.

9. Milling depth control system according to any one of the preceding claims, wherein the data processing unit (9, 9') comprises
• a data accumulator part (17), configured to reference the measurement data with positional information of the milling machine (1) provided by the control unit (5) of the milling machine (1), particularly wherein the positional information is provided by position and velocity data of the milling machine (1), thereby providing for the planned final milling depth (10, 15) being referenced with the positional information of the milling machine (1),
• a map updater part (18), configured to generate or update a milling depth map with the planned final milling depth (10, 15), wherein the milling depth map comprises planned final milling depths (10, 15) for different locations of the milling machine (1), and
• an action executor part (19), configured to compare a currently used milling depth with a planned final milling depth (10, 15) provided for a current position of the milling machine (1) within the milling depth map, and to send a control command to the control unit (5) of the milling machine (1) for commanding a lifting or lowering of the milling tool (2).

10. Milling depth control system according to claim 9, wherein the data processing unit (9, 9') is configured that the data accumulator part (17) and the action executor part (19) are each in separate communicative connection with the control unit (5) of the milling machine (1).

11. Milling depth control system according to claim 9 or 10, wherein the data processing unit (9) comprises an intermediate control unit (20) configured to communicate with the data accumulator part (17), the action executor part (19), and the control unit (5) of the milling machine (1), and to provide for data exchange between the data accumulator part (17) and the control unit (5), and the action executor part (19) and the control unit (5), respectively.

12. A milling machine (1) configured to mill a stratified surface (3), wherein the milling machine (1) comprises a milling tool (2) that is vertically adjustable relative to the milling machine (1) and configured to mill the stratified surface (3) to a settable milling depth,
**characterized in that**
the milling machine (1) comprises a milling depth control system according to any one of claims 1 to 11.

13. Milling machine (1) according to claim 12, embodied as a milling machine for road milling or for use in surface mining.
